# EUROPEAN PATENT SPECIFICATION

(11) **EP 3 495 852 B1**
(45) Date of publication and mention of the grant of the patent: **27.09.2023**
(21) Application number: 18210429.9
(22) Date of filing: 05.12.2018
(51) Int. Cl.: G01V 5/00

(54) **AN EQUIPMENT AND METHOD FOR SCANNING A CARRIAGE OF A TRAIN**
AUSRÜSTUNG UND VERFAHREN ZUM ABTASTEN EINES WAGENS EINES ZUGES
ÉQUIPEMENT ET PROCÉDÉ DE BALAYAGE D'UN CHARIOT D'UN TRAIN

(30) Priority: 11.12.2017 CN 201711307214
(43) Date of publication of application: 12.06.2019
(73) Proprietor: NUCTECH COMPANY LIMITED, Beijing 100084 (CN)
(72) Inventor: LI, Juxuan, Beijing, 100084 (CN); LI, Jian, Beijing, 100084 (CN); YAO, Yang, Beijing, 100084 (CN); LI, Jianmin, Beijing, 100084 (CN); RAN, Zhansen, Beijing, 100084 (CN); LI, Yuanjing, Beijing, Beijing 100084 (CN); ZONG, Chunguang, Beijing, Beijing 100084 (CN); LI, Yulan, Beijing, Beijing 100084 (CN); MA, Yuan, Beijing, Beijing 100084 (CN); CHEN, Zhiqiang, Beijing, Beijing 100084 (CN); YU, Weifeng, Beijing, 100084 (CN); ZHANG, Li, Beijing, Beijing 100084 (CN); XU, Yanwei, Beijing, 100084 (CN); LI, Huaping, Beijing, 100084 (CN)
(74) Representative: Meissner Bolte Partnerschaft mbB

(56) References cited:
- EP-A1- 3 178 719
- CN-A- 106 054 271
- US-A1- 2017 186 172

## Description

### TECHNICAL FIELD

The present invention relates to the technical field of train inspection, especially to an equipment and method for scanning a carriage of a train.

### BACKGROUND ART

At present, the existing train scanning inspection system identifies a type, section and speed of a carriage by a wheelbase identification system or photoelectric sensors. However, since the identification only by wheelbase identification is comparatively singular, and a passenger carriage and a freight carriage with comparatively close wheelbases, missed scanning or false scanning is likely to occur. Further, the photoelectric sensors are susceptible to environmental influences. Thus, manual assistance in identification of the type of a carriage is added in the scanning process. While manual assistance requires to provide tools for manually judging and identifying a type, for example a monitoring camera and the like, which are also susceptible to environmental influences. Further, the scanning process with manual assistance requires the manual involvement twice, such as assisting in judging a type and identifying the safety in radiation protection, is a semi-automatic scanning process with a high manual cost. In addition, the existing device occupies a large range of land, with a high cost in civil construction, and there is a poor adaptability of the device.

It should be noted that, the information in the portion of the background art of the present invention is merely intended to enhance the understanding of the overall background of the present invention, and should not be construed as admitting or hinting in any form that the information constitutes the prior art already commonly known by a person skilled in the art.

US20170186172A1 provides a method and system for identifying a train number and train type. The method includes: continuously photographing a train under inspection by using a linear-array camera in motion relative to the train under inspection, and generating a plurality of partial images of the train; splicing the plurality of partial images of the train; correcting distortion of the spliced image; identifying a train number from the corrected image; wherein the correcting distortion of the spliced image includes : extracting a contour of a wheel from the spliced image; obtaining a ratio between a horizontal diameter and a vertical diameter of the wheel from the contour; if the ratio is greater than a first preset threshold, horizontally compressing the spliced image according to the ratio; and if the ratio is smaller than a second preset threshold, horizontally stretching the spliced image.

EP3178719A1 relates to a train type identification method and system, and a security inspection system and system. The train type identification method includes: continuously photographing a to-be-inspected train by using a linearity camera in motion relative to the to-be-inspected train, and generating (S202) a plurality of train sub-images; splicing (S204) the plurality of train sub-images to acquire a train image of the to-be-inspected train; extracting (S206) at least one train characteristic parameter from the train image; comparing (S208) the at least one train characteristic parameter with a prestored train type template; and automatically determining (S210) a type of the to-be-inspected train based on a comparison result.

CN106054271A relates to a safety checking method and system. The method is configured to perform safety check through adoption of a scanning device consisting of an accelerator and a detector. The method comprises: after it is determined that a train is a lorry, controlling the scanning device into a starting state according to a first signal; if the accelerator is not in a beam-out preheating state, allowing the accelerator to be the beam-out preheating state according to second signals; when a system automatically identifies and mutually determines that the train is the lorry again, maintaining the beam-out preheating state in the beam-out preheating state; reducing the beam-out frequency of the accelerator according to the third signal; and recovering the beam-out frequency of the accelerator and controlling the accelerator to take the beam out according to four signals.

### CONTENT OF THE INVENTION

The object of the present invention is to propose an equipment according to claim 1 and method according to claim 5 for scanning a carriage of a train, to solve a series of problems caused by a necessity to add manual assistance in identification of a type due to a singular scanning manner in the prior art.

The invention is set out in the appended set of claims.

### BRIEF DESCRIPTION OF THE DRAWINGS

The accompanying drawings described herein are used to provide a further understanding of the present invention and constitute a part of the present application. The illustrative embodiments of the present invention as well as the illustrations thereof, which are used for explaining the present invention, do not constitute improper definitions on the present invention.

In the drawings:
FIG. 1 is a schematic structural view of one embodiment of the equipment for scanning a carriage of a train according to the present invention.
FIG. 2 is a schematic view of a partial structure of a train in one embodiment of the equipment for scanning a carriage of a train according to the present invention.
FIG. 3 is a schematic view of one embodiment of the equipment for scanning a carriage of a train according to the present invention when scanning an upward carriage.
FIG. 4 is a schematic view of one embodiment of the equipment for scanning a carriage of a train according to the present invention when scanning carriages running in two opposite directions.
FIG. 5 is a schematic view of a mounting structure of the first image capturing device in one embodiment of the equipment for scanning a carriage of a train according to the present invention.
FIG. 6 is a flow chart of one embodiment of the method for automatically scanning a carriage of a train according to the present invention.

In the drawings:
1. first image capturing device; 2. second image capturing device; 3. area sensor; 5. first light curtain; 6. second light curtain; 7. radiation scanning device; 8. column; 9. control room;
11. first camera; 12. second camera; 21. third camera; 22. fourth camera;
31. first area sensor; 32. second area sensor; 33. third area sensor; 34. fourth area sensor; 35. fifth area sensor; 36. sixth area sensor;
41. first sensor group; 42. second sensor group; 43. third sensor group; 44. fourth sensor group;
51. left side first light curtain; 52. right side first light curtain; 61. left side second light curtain; 62. right side second light curtain;
71. accelerator; 72. detector.

### EMBODIMENTS

Next, the technical solution in the embodiments will be explicitly and completely described in combination with the accompanying drawings in the embodiments of the present invention.

In the description of the present invention, it is necessary to understand that, the azimuth or positional relations indicated by the terms "center", "transverse", "longitudinal", "front", "rear", "left", "right", "up", "down", "vertical", "horizontal", "top", "bottom", "within", "outside", which are based on the azimuth or positional relations illustrated by the drawings, are only for facilitating description of the present invention and simplifying the description, rather than indicating or implying that the device or element referred thereto has to present a particular azimuth, and be constructed and operated in a particular azimuth, so that it cannot be understood as limiting the protection scope of the present invention.

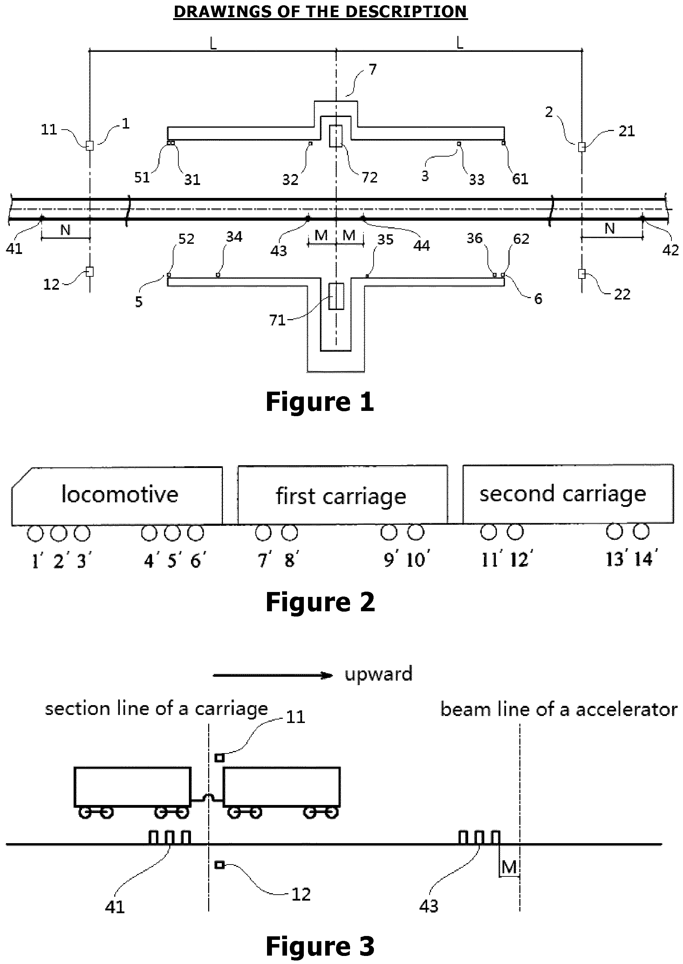

As shown in FIG. 1, in an illustrative embodiment of the equipment for scanning a carriage of a train provided by the present invention, the equipment for scanning a carriage of a train comprises a first wheelbase measuring device, a first image capturing device 1, a radiation scanning device 7 and a control system, wherein the first wheelbase measuring device is configured to measure a wheelbase of a carriage; the first image capturing device 1 is configured to capture an image of the carriage; the radiation scanning device 7 is configured to scan the carriage; and the control system is configured to identify a type of the carriage according to wheelbase information measured by the first wheelbase measuring device and the image captured by the first image capturing device 1, and changing a mode of the radiation scanning device 7 according to the type of the carriage.

In the aforementioned illustrative embodiment, by providing the first wheelbase measuring device and the first image capturing device 1, the present invention may identify the type of the carriage in at least two manners such as to measure the wheelbase and capture the image, so as to reduce the occurrence of problems such as missed scanning or false scanning. Moreover, after measuring the wheelbase and capturing the image, a type of the carriage is finally identified by the control system, so that it is possible to cancel manual assistance in identifying the type of the carriage, lessen manual involvement and reduce manual mistake; and it is also possible to reduce manual cost and improve the degree of automation.

In one embodiment of the equipment for scanning a carriage of a train provided by the present invention, the control system may identify the type of the carriage in a specific manner such that: the control system comprises a first controller, a second controller and a central controller, wherein the first controller is configured to identify the type of the carriage according to the wheelbase information measured by the first wheelbase measuring device, the second controller is configured to identify the type of the carriage according to the image captured by the first image capturing device 1 (wherein, the operations of identifying the type of the carriage according to a wheelbase and identifying the type of the carriage according to an image may be performed simultaneously, and may also be finished one after another, and the specific operation sequence is not limited), and the central controller is configured to compare the identification results of the first wheelbase measuring device and the first image capturing device 1, such that the control system outputs the identification results when the identification results of the first controller and the second controller are consistent, and controls the radiation scanning device 7 to scan or not to scan according to the identification results. Further, when the identification results of the first controller and the second controller are inconsistent, the control system will mark the carriage as an unidentified type. For a carriage with an unidentified type, the control system will directly send to the radiation scanning device 7 a signal to stop scanning (not scanning), to avoid the carriage.

In practical applications, the first wheelbase measuring device may be combined with the first controller to form a wheelbase identifying system, the first image capturing device 1 may be combined with the second controller to form an image identifying system, and the central controller may be arranged in a conveniently operated position as needed. Certainly, the first controller and the second controller may also be provided independently, and will no longer be described in detail here.

In another embodiment of the equipment for scanning a carriage of a train provided by the present invention, the specific principles of identifying the type by measuring a wheelbase of the carriage may be as follows: first measure a wheelbase of the carriage by the wheelbase measuring device, and then send the measured wheelbase information to the control system which receives the measured wheelbase information and compares it with the wheelbase information of a carriage whose type has been known and stored in advance in the control system to obtain the type of the carriage. Certainly, in addition to such manner, it is also possible to use other manners to identify the type of the carriage by measuring a wheelbase, which will no longer be described in detail here.

As shown in FIG. 2, which is a schematic structural view of one embodiment of the train that is scanned and detected according to the present invention, the train comprises a locomotive located at the front as well as a first carriage and a second carriage located after the locomotive, wherein the locomotive has six axles, and the first carriage and the second carriage respectively have four axles. Accordingly, for the locomotive, by measuring five wheelbases among its six axles, it is possible to identify its type except that the locomotive is generally not scanned. This may be controlled by the control system which controls the radiation scanning device 7 not to scan or stop scanning when a carriage is identified to be a locomotive. Further, for the first carriage and the second carriage, it is possible to identify its type by three wheelbases among its four axles, and then the radiation scanning device 7 is controlled to scan if the identification result is a freight; and to avoid and not to scan if the identification result is a passenger .

The specific principles of identifying the type of the carriage by capturing an image may be as follows: first capture an image of the carriage by the first image capturing device 1 and then send the captured image to the control system which forms an image having comparable features by processing and analyzing the captured image, and compares it with an image of a carriage whose type has been known and stored in advance in the control system to obtain the type of the carriage. Certainly, in addition to such manner, it is also possible to use other manners to identify the type of the carriage by capturing an image, which will no longer be described in detail here.

In an embodiment of the equipment for scanning a carriage of a train provided by the present invention, the radiation scanning device 7 has a scanning mode and a non-scanning mode, wherein the control system adjusts the radiation scanning device 7 to enter a scanning mode, i.e. the radiation scanning device 7 starts scanning, when the carriage passes and is identified as a freight carriage by the control system; and the control system adjusts the radiation scanning device 7 to enter a non-scanning mode, i.e. the radiation scanning device 7 stops scanning, when the carriage does not pass or the carriage passes and is identified as a passenger carriage by the control system.

The equipment for scanning a carriage of a train provided by the present invention further comprises a first sensor group 41 provided upstream of the first image capturing device 1, wherein the first sensor group 41 is used for detecting an arrival of the carriage and sending an arrival signal to the control system to enable the control system to calculate the time when the first image capturing device 1 starts to capture an image according to the arrival signal, and process and analyze the captured image, so as to identify the type of the carriage.

It should be noted that, the arrival signal detected by the first sensor group 41 refers to a signal that the carriage arrives at the first sensor group 41.

By providing the first sensor group 41, the time when the first image capturing device 1 starts capturing an image may be effectively controlled, thereby avoiding the problem that the first image capturing device 1 is set to keep capturing in order to prevent missed capturing, effectively shortening the operation time of the first image capturing device 1, improving the service life and replacement frequency of the first image capturing device 1, and reducing the cost of the device.

Specifically, the first sensor group 41 may comprise at least two sensors, for example including a first sensor and a second sensor, wherein the first sensor is disposed upstream of the second sensor, that is, the carriage during the travel passes through the first sensor prior to the second sensor. A distance between the first sensor and the second sensor is a known quantity, such that the first sensor may record the time when the front of the carriage reaches the first sensor. The second sensor again records the current time when the front of the carriage reaches the second sensor, and the travel speed of the carriage may be calculated according to a distance between the first sensor and the second sensor and a time difference recorded twice. Further, as a distance between the first sensor and the first image capturing device is also a known quantity, the time required to be consumed for the carriage to move from the first sensor to the first image capturing device 1 may be calculated according to the travel speed of the carriage and the distance between the first sensor and the first image capturing device 1. Therefore, according to the time recorded when the front of the carriage arrives at the first sensor and the time required to be consumed by calculation, it is possible to obtain the time when the carriage arrives at the first image capturing device 1, and accordingly, it is possible to control the time when the first image capturing device 1 starts capturing.

In addition, the first sensor group 41 is also used as the first wheelbase measuring device, that is, the first sensor group 41 may also realize the function that can be realized by the first wheelbase measuring device, except that the aforementioned function of determining the time when the first image capturing device 1 starts capturing an image may be realized. Specifically, by means of the first sensor group 41, it is possible to measure a wheelbase of the carriage and send the wheelbase information to the control system, so as to enable the control system to identify the type of the carriage according to the wheelbase information.

By means of the aforementioned configuration, the two functions of detecting the time when the first image capturing device 1 starts capturing and measuring the wheelbase can be simultaneously realized by a group of sensors, thereby effectuating the integration of the functions and facilitating reducing the amount of the sensors, so that it is not only possible to simplify the structural arrangement but also possible to save the cost.

Specifically, as shown above, when the first sensor group 41 comprises the first sensor and the second sensor, by recording the time when the first axle of the carriage passes through the first sensor and the time when the second axle of the carriage passes through the first sensor, it is possible to calculate the time consumed for the carriage to pass through the wheelbase between the first axle and the second axle, and the travel speed of the carriage may also be obtained by calculation. Therefore, a wheelbase between the first axle and the second axle may be calculated according to the time and the travel speed. The wheelbases among other axles may also be measured according to a similar method, and the measured wheelbases are then sent to the control system which may compare the wheelbase information with the wheelbase information of a carriage whose type has been known and stored in advance in the control system to obtain the type of the carriage.

The equipment for scanning a carriage of a train provided by the present invention further comprises a second sensor group 42 provided downstream of the radiation scanning device 7, wherein the second sensor group 42 is used for detecting a departure of the entire train and sending a departure signal to the control system. The effect of sending the departure signal to the control system will be further introduced hereinafter.

It should be noted that, the departure signal detected by the second sensor group 42 refers to a signal that the entire train departs from the second sensor group 42.

The equipment for scanning a carriage of a train provided by the present invention further comprises a third sensor group 43 provided upstream of the radiation scanning device 7, wherein the third sensor group 43 is used for detecting an arrival and a departure of the carriage, and sending an arrival signal and a departure signal to the control system, so that the control system calculates the time when the radiation scanning device starts scanning according to the arrival signal and the time when the radiation scanning device stops scanning according to the departure signal in the condition that the carriage is identified as a freight carriage.

It should be noted that, the arrival signal and the departure signal detected by the third sensor group 43 refer to a signal that the carriage arrives at the third sensor group 43 and a signal that the carriage departs from the third sensor group 43.

By providing the third sensor group 43, the time when the radiation scanning device 7 starts scanning may be effectively controlled, to leave the warm-up time for the radiation scanning device 7, such that the radiation scanning device 7 can smoothly scan by emitting a beam upon arrival of the carriage identified to be a freight carriage, and the scanning accuracy is improved. At the same time, it is also possible to effectively control the time when the radiation scanning device 7 stops scanning, and prevent that the radiation scanning device 7 is still in a beam-emitting state after departure of the carriage identified to be a freight carriage, thereby avoiding to cause false scanning of the following carriage of a passenger carriage.

Further, there is a first preset distance between the third sensor group 43 and the radiation scanning device 7, wherein the third sensor group 43 is also used for detecting a speed of the carriage. Please refer to the aforementioned detection method of the first sensor group 41 for the specific detection manner, which will no longer be repeated here.

The speed of the carriage detected by the third sensor group 43 may be different from the speed of the carriage detected by the first sensor group 41. The reason why it is necessary to re-measure the speed of the carriage by the third sensor group 43 is that, the speed of the carriage may be in a constantly varying process, and by detecting its speed in real time, it is possible to more accurately calculate the time when the radiation scanning device 7 starts scanning or stops scanning according to its speed.

Specifically, the control system may calculate the time when the radiation scanning device 7 starts scanning according to the arrival signal, the speed of the carriage, and the first preset distance, and may calculate the time when the radiation scanning device 7 stops scanning according to the departure signal, the speed of the carriage, and the first preset distance.

As shown in FIG. 3, the arrival signal and the departure signal of the carriage may also be understood as the section signals of the carriages. Generally, a hook is provided at the joint of two carriages, and the arrival or departure time of the carriage may be obtained by detecting a hook signal. Certainly, in addition to a hook signal, it is also possible to use other signals provided at other positions of the carriages as the section signals, as long as they can indicate the arrival and departure of the carriages.

The first preset distance is a known quantity, the value of which may be flexibly set according to actual field conditions. The setting of the length of the first preset distance is mainly related to the wheelbase of the carriage and the travel speed of the carriage. It is necessary to ensure that the control system can calculate the time when the radiation scanning device 7 starts scanning before the front of the carriage arrives at the radiation scanning device 7, and enable the radiation scanning device 7 to get ready to start scanning. Certainly, before the front of the carriage arrives at the radiation scanning device 7, it is also necessary to be able to ensure that the control system can identify the type of the carriage, so as to control whether to scan by the radiation scanning device 7.

In the equipment for scanning a carriage of a train provided by the present invention, there is a first sensor group 41, a third sensor group 43 and a second sensor group 42 which are arranged in sequence along a traveling direction of the carriage, wherein the first sensor group 41 is used for detecting an arrival of the carriage and sending an arrival signal to the control system to enable the control system to calculate the time when the first image capturing device 1 starts to capture an image according to the arrival signal; the first sensor group 41 is also used as the first wheelbase measuring device to measure a wheelbase of the carriage by the first sensor group 41 and send wheelbase information to the control system; the second sensor group 42 is used for detecting a departure of the entire train and sending a departure signal to the control system; and the third sensor group 43 is used for detecting an arrival and a departure of the carriage, and sending an arrival signal and a departure signal to the control system, so that the control system calculates the time when the radiation scanning device starts scanning according to the arrival signal and the time when the radiation scanning device stops scanning according to the departure signal in the condition that the carriage is identified as a freight carriage.

It should be noted that, according to an example not forming part of but useful for understanding the presently claimed invention, if there is no need to monitor the radiation area which will be further introduced hereinafter, the equipment for scanning a carriage of a train comprises a first sensor group 41 and a third sensor group 43, and a second sensor group 42 is not necessary.

Further, the equipment for scanning a carriage of a train further comprises a second image capturing device 2 and a fourth sensor group 44, wherein the second image capturing device 2 is disposed upstream of the second sensor group 42, and the fourth sensor group 44 is disposed downstream of the radiation scanning device 7 and located between the third sensor group 43 and the second image capturing device 2, such that the carriage running reversely sequentially passes through the second sensor group 42, the fourth sensor group 44, and the first sensor group 41, wherein the second sensor group 42 is used for detecting an arrival of the carriage running reversely and sending an arrival signal to the control system to enable the control system to calculate the time when the second image capturing device 2 starts to capture an image according to the arrival signal; the second sensor group 42 is also used as the second wheelbase measuring device to measure a wheelbase of the carriage by the second sensor group 42 and send wheelbase information to the control system; the first sensor group 41 is used for detecting a departure of the entire train running reversely and sending a departure signal to the control system; and the fourth sensor group 44 is used for detecting an arrival and a departure of the carriage running reversely, and sending an arrival signal and a departure signal to the control system, so that the control system calculates the time when the radiation scanning device starts scanning according to the arrival signal and the time when the radiation scanning device stops scanning according to the departure signal in the condition that the carriage is identified as a freight carriage.

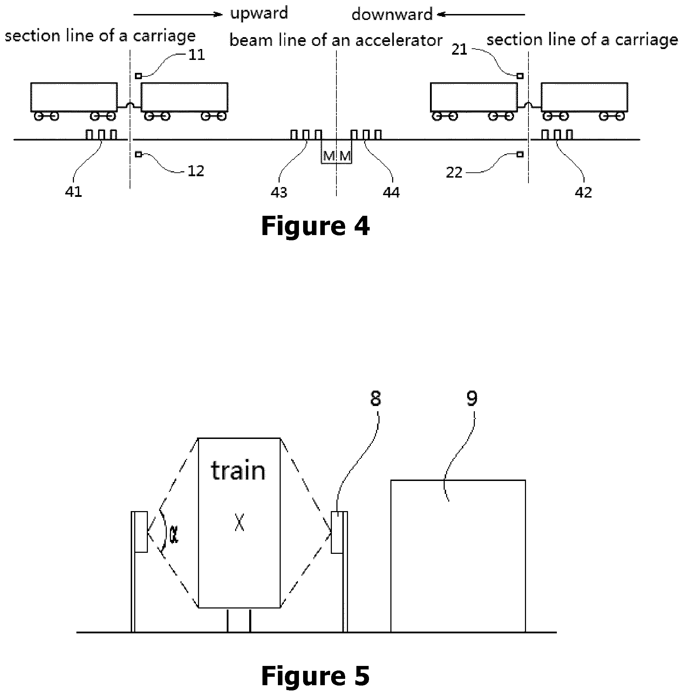

As shown in FIG. 4, by providing the fourth sensor group 44, it is possible to achieve the purpose that the carriages running in two opposite directions can be scanned and detected. Moreover, when the type running in a reverse direction is scanned and detected, on the basis of the first sensor group 41 and the second sensor group 42, it is only necessary to add a fourth sensor group 44, to effectuate repeatedly using the first sensor group 41 and the second sensor group 42. At this time, the second sensor group 42 realizes the same function as the first sensor group 41 running forwardly, while the first sensor group 41 realizes the same function as the second sensor group 42 running forwardly. In this way, the amount of the sensors provided may be effectively reduced, so that it is not only possible to simplify the structural arrangement, but also possible to reduce the investment cost.

The third sensor group 43 and the fourth sensor group 44 are arranged symmetrically with respect to the radiation scanning device 7. That is, the horizontal distance between the third sensor group 43 and the radiation scanning device 7 is equal to the horizontal distance between the fourth sensor group 44 and the radiation scanning device 7, and as shown in FIG. 1, the distance is M. This may reduce the difficulty in field layout, and improve the installation efficiency; and facilitate the overall control forwardly and reversely. It is also possible to diminish the land occupation range of the installation area, and improve the adaptability of the device.

The first sensor group 41, the second sensor group 42, the third sensor group 43 or the four sensor group 44 are preferred but not limited to comprise at least three sensors that are adjacently arranged. The distance among the respective sensors is a known quantity, to facilitate the detection. By providing at least three sensors, when one of the sensors is malfunctioned, the other two may be utilized to realize normal functions, and prevent the breakdown of the entire device. It is also possible to improve the service life of the sensor groups, and reduce the replacement frequency.

The first image capturing device 1 and the second image capturing device 2 are preferred but not limited to be arranged symmetrically with respect to the radiation scanning device 7. That is, the horizontal distance between the first image capturing device 1 and the radiation scanning device 7 is equal to the horizontal distance between the second image capturing device 2 and the radiation scanning device 7. This may reduce the difficulty in field layout, and improve the installation efficiency; and facilitate the overall control forwardly and reversely. It is also possible to diminish the land occupation range of the installation area, and improve the adaptability of the device.

The distance between the first image capturing device 1 and the first sensor group 41 is also equal to the distance between the second image capturing device 2 and the second sensor group 42. As shown in FIG. 1, the distance is N. This may also reduce the difficulty in field layout, and improve the installation efficiency; and facilitate effectuating scanning and inspecting the reciprocally running carriages. It is also possible to diminish the land occupation range of the installation area, and improve the adaptability of the device.

the equipment for scanning a carriage of a train comprises two first image capturing device 1 and/or second image capturing device 2, wherein one is disposed on one side of a track through which the carriage passes, and the other is disposed on the other side of the track through which the carriage passes.

As shown in FIG. 1, the first image capturing device 1 comprises a first camera 11 provided on the left side of the track, and a second camera 12 disposed on the right side of the track, so that it is possible to capture the carriage by two cameras and obtain a more complete image of the carriage.

The second image capturing device 2 comprises a third camera 21 provided on the left side of the track and a fourth camera 22 provided on the right side of the track, so that it is also possible to obtain a more complete image of the carriage.

In an example not forming part of but useful for understanding the presently claimed invention, if the requirements may be satisfied by capturing an image only at one side of the carriage, it is possible to only provide one first image capturing device 1.

The camera is preferably line scan camera. The number of the line scan camera is one or more.

In addition, the distance between the first image capturing device 1 and/or the second image capturing device 2 and the radiation scanning device 7 is greater than the length of the carriage. This arrangement may ensure that the wheelbase of the carriage can be completely measured before the front of the carriage arrives at the radiation scanning device 7, and enable the control system to have sufficient time to determine the type of the carriage, so as to avoid false scanning or missed scanning.

As a further improvement of the equipment for scanning a carriage of a train according to the present invention, the equipment for scanning a carriage of a train further comprises a monitoring device for monitoring and protecting a radiation area formed by the radiation scanning device 7.

By providing the monitoring device, it is possible to automatically effectuate monitoring the radiation area, thereby further lessening manual involvement, reducing manual cost, and improving the degree of automation of the scanning device.

The monitoring device is capable of sending an alarm signal or sending to the radiation scanning device 7 a signal to stop scanning when a foreign matter is monitored to enter the radiation area.

Specifically, the monitoring device may comprise an area sensor 3 provided within the radiation area, wherein the area sensor 3 is capable of monitoring the entire radiation area after receiving a signal that the entire train departs from the radiation area, and is capable of avoiding the carriage after receiving a signal that the entire train arrives at the radiation area, so as to monitor the radiation areas on both sides of the carriage.

By utilizing the characteristic that the monitoring range of the area sensor 3 may vary, it is possible to only monitor the area at both sides of the track when there is passage of a train. Moreover, upon departure of the train, it is possible to monitor the overall monitoring area, so as to avoid such a danger that people or animals enter the radiation area.

The area sensors 3 has an amount of at least four, wherein, at least two are respectively provided at both sides of the track through which the carriage passes, so that both sides of the track may be monitored, and there is a wider monitoring range.

The area sensors 3 are arranged in cross on both sides of the track through which the carriage passes. In this way, it is possible to avoid that the monitoring ranges of the respective area sensors 3 are overlapped to cause waste, and effectuate maximum employment of the device.

As shown in FIG. 1, the left side of the track is provided with a first area sensor 31, a second area sensor 32 and a third area sensor 33, and the right side of the track is provided with a fourth area sensor 34, a fifth area sensor 35 and a sixth area sensor 36. The six area sensors that are arranged in cross, may achieve a relatively comprehensive monitoring of the radiation area.

Instead of the area sensor 3, the monitoring device may comprise a first light curtain 5 at an entrance of the radiation area and a second light curtain 6 disposed at an exit of the radiation area, wherein the control system is capable of controlling the first light curtain 5 and the second light curtain 6 to be closed after receiving a signal that the entire train arrives at the radiation area, and controlling the first light curtain 5 and the second light curtain 6 to be opened after receiving a signal that the entire train departs from the radiation area.

The first light curtain 5 and the second light curtain 6 are disposed at the entrance and the exit, and may effectively monitor foreign matter entering the radiation area through the entrance or the exit. The first light curtain 5 and the second light curtain 6 as well as the area sensor 3 may be used simultaneously to achieve more comprehensive and more reliable protection.

The first light curtain 5 and the second light curtain 6 are required to be turned off when there is passage of a train. The purpose of such configuration is to prevent that the first light curtain 5 and the second light curtain 6 are triggered by entry of the train, and avoid that the entire device fails due to the alarms of the first light curtain 5 and the second light curtain 6.

Wherein, the monitoring plane formed by the area sensor 3 and the monitoring plane formed by the first light curtain 5 and the second light curtain 6 are perpendicular to each other.

Specifically, the monitoring plane formed by the area sensor 3 is a horizontal plane, and the monitoring plane formed by the first light curtain 5 and the second light curtain 6 is a vertical plane.

As shown in FIG. 1, the equipment for scanning a carriage of a train comprises two first light curtains 5, which are respectively a left side first light curtain 51 provided on the left side of the track and a right side first light curtain 52 provided on the right side of the track, so that it is possible to effectuate light curtain protection on both sides of the track at the entrance of the radiation area. The equipment for scanning a carriage of a train comprises two second light curtains 6, which are respectively a left side second light curtain 61 provided on the left side of the track and a right side second light curtain 62 provided on the right side of the track, so that it is possible to effectuate light curtain protection on both sides of the track at the exit of the radiation area.

For a monitoring device, it may be understood to comprise a scanning state and a non-scanning state. When it is detected that there is passage of a train, the monitoring device enters a scanning state; when it is detected that there is departure of a train, the monitoring device enters a non-scanning state.

The scanning state and the non-scanning state of the monitoring device mentioned here are not the same concepts as the scanning mode and the non-scanning mode of the radiation scanning device 7. When it is detected that there is arrival of a train, the monitoring device enters the scanning state. At this time, the light curtain 5 and the second light curtain 6 are turned off, and the monitoring range of the area sensor 3 avoids the train, and only detects the area on both sides of the track, to avoid that the entry of the train gives rise to the alarm of the monitoring device, so as to further affect normal operation of the scanning process. Further, when it is detected that the entire train departs and there is no arrival of new train, the monitoring device enters the non-scanning state. At this time, the light curtain 5 and the second light curtain 6 are turned on, and the monitoring arrange of the area sensor 3 covers the entire radiation area, to form a monitoring of the radiation area without a dead corner. Further, the entry of the radiation scanning device 7 into the scanning mode means to start scanning a carriage identified to be a freight carriage; and the entry into the non-scanning mode means to stop the scanning program.

In an embodiment of the equipment for scanning a carriage of a train according to the present invention, the first image capturing device 1 is also used for obtaining a carriage number of the carriage by capturing an image of the carriage, wherein the control system is capable of binding the image captured by the first image capturing device 1, the carriage number and a scanned image of the radiation scanning device 7. This allows different carriages to correspond to their captured images and scanned images, thereby facilitating marking and storing the images.

As shown in FIG. 5, the embodiment of the equipment for scanning a carriage of a train according to the present invention may further comprise a column 8 provided on both sides of the track through which the carriage passes. The first image capturing device 1 and/or the second image capturing device 2 is/are mounted on the column 8. The mounting height of the first image capturing device 1 and/or the second image capturing device 2 can ensure that the flare angle(s) of the first image capturing device 1 and/or the second image capturing device 2 cover(s) the bottom and the top of the carriage.

The equipment for scanning a carriage of a train also comprises a control room 9 for mounting the control system.

In an embodiment of the equipment for scanning a carriage of a train according to the present invention, the radiation scanning device 7 may comprise an accelerator 71 and a detector 72, wherein the accelerator 71 is disposed on one side of the track, and the detector 72 is disposed on the other side of the track. The accelerator 71 may emit an electron beam to scan the carriage, and the detector 72 may receive the scanned beam to form an image, which may be used to judge the type of the carriage after processing and analysis.

In order to solve the problems in the prior art, the present invention provides a method for automatically scanning a carriage of a train using the equipment of the invention, comprising:
measuring a wheelbase of a carriage and capturing an image of the carriage;
identifying a type of the carriage by the control system according to the measured wheelbase and the captured image;
controlling whether to scan the carriage according to a type identification result of the carriage.

Wherein, the operation of identifying a type of the carriage by the control system specifically comprises:
first, identifying the type of the carriage according to the measured wheelbase, and identifying the type of the carriage according to the captured image respectively by means of the control system; then comparing an identification result obtained by the measured wheelbase of the carriage and an identification result obtained by the captured image, to output an identification result when both identification results are consistent; and to output an instruction to stop scanning when both identification results are inconsistent.

Wherein, the operation of obtaining an identification result by measuring a wheelbase specifically comprises:
measuring the wheelbase of the carriage;
comparing the measured wheelbase with a wheelbase of a carriage whose type has been known and stored in advance in the control system to identify the type of the carriage.

The operation of identifying a type of the carriage according to the captured image comprises:
capturing an image of the carriage;
comparing the captured image with an image of a carriage whose type has been known and stored in advance in the control system to identify the type of the carriage.

Prior to the operation of capturing an image, the method further comprises:
detecting an arrival of the carriage, and calculating a starting time to capture an image according to an arrival signal of the carriage.

The aforementioned method for scanning a carriage of a train may further comprise:
detecting an arrival and a departure of the carriage, and controlling a scanning time of the carriage according to an arrival signal and a departure signal of the carriage.

Wherein, controlling a scanning time of the carriage further comprises:
detecting the carriage section by section to realize startting scanning upon arrival of a front of the carriage and stopping scanning upon departure of a rear of the carriage.

Further, the operation of controlling whether to scan the carriage specifically comprises:
starting scanning when the carriage passes and the carriage is identified as a freight carriage
stopping scanning when the carriage does not pass or when the carriage passes and the carriage is identified as a passenger carriage.

The aforementioned method for scanning a carriage of a train may further comprise:
monitoring and protecting a radiation area formed in a scanning process.

Further, the method for automatically scanning a carriage of a train further comprises:
sending an alarm signal or sending a signal to stop scanning when a foreign matter is monitored to enter the radiation area.

Specifically, the operation of monitoring and protecting a radiation area specifically comprises:
monitoring and protecting the entire radiation area by means of a first protection unit after receiving a signal that the entire train departs from the radiation area, and avoiding the carriage after receiving a signal that the entire train arrives at the radiation area, so as to monitor and protect the radiation areas on both sides of the carriage; and/or
monitoring and protecting an entrance and an exit of the radiation area by means of a second protection unit, wherein the second protection unit is turned off after receiving a signal that the carriage arrives at the radiation area, and turned on after receiving a signal that the carriage departs from the radiation area.

The aforementioned method for automatically scanning a carriage of a train may further comprise:
obtaining a carriage number of the carriage, to bind the image captured in the identification process, the carriage number and the image scanned in the scanning process.

The positive technical effects possessed by the equipment for scanning a carriage of a train in the aforementioned various embodiments are also applicable to the method for automatically scanning a carriage of a train, which will no longer be repeated here.

The equipment and method for scanning a carriage of a train provided by the present invention are applicable not only to railway trains but also to highway trains.

The operation process of one embodiment of the equipment and method for scanning a carriage of a train according to the present invention will be described below in combinations with FIGS. 1-6:
As shown in FIG. 1, when the equipment for scanning a carriage of a train scans in one direction, the first sensor group 41, the third sensor group 43, and the second sensor group 42 are sequentially arranged along the forward direction; during the reciprocal scanning, the first sensor group 41, the third sensor group 43, the fourth sensor group 44, and the second sensor group 42 are sequentially arranged on the track.

The first camera 11 and the second camera 12 are respectively provided on both sides in the front end of the track, and the third camera 21 and the fourth camera 22 are respectively arranged on both sides in the rear end of the track, to capture an image of the carriage, and identify the type of the carriage and identify a carriage number according to the captured image, and determine whether to scan according to an identification result of the type . The captured image is bound to the carriage number and the captured image.

At the entrance of the radiation area, the left first side light curtain 51 and the right side first light curtain 52 are respectively arranged on both sides of the track; and at the exit of the radiation area, the left side second light curtain 61 and the second side light curtain 62 are respectively disposed on both sides of the track.

The radiation area is further internally arranged with six sets of area sensors 3, wherein the first area sensor 31, the second area sensor 32, and the third area sensor 33 are arranged on the left side of the track, and the fourth area sensor 34, the fifth area sensor 35 and the sixth area sensor 36 are arranged on the right side of the track, so as to monitor the entire radiation area without a dead corner.

The radiation protection monitoring area is divided into a scanning state and a non-scanning state.

Non-scanning state: at this time, the first light curtain 5 and the second light curtain 6 are turned on, and the monitoring range of the area sensor 3 covers the entire radiation area. If any foreign matter enters the radiation area or stays for a long time, the system will alarm to warn via broadcast, or the radiation scanning device is placed in the non-scanning mode. After departure of the foreign matter, the alarm of the system is disarmed.

Scanning state: the first light curtain 5 and the second light curtain 6 are turned off and disabled, and the area sensor 3 changes the monitoring area, to protect only the foreign objects passing through the passages on both sides of the track, without alarming or protecting the train on the track.

As shown in FIG. 2, when it is to identify the type of a carriage of a train, it may be realized by measuring the wheelbase.

As shown in FIG. 3, when the upward carriage arrives at the first sensor group 41, the first camera 11 and the second camera 12 initiate photographing, and the first image capturing device 1 and the control system identify the type according to the captured image. After the carriage passes through the first sensor group 41, the control system integrates the image identification result and the wheelbase identification result of the carriage to finally determine the type. If it is a truck, when the carriage arrives at the third sensor group 43, the control system controls the accelerator 71 to emit a beam, and the detector 72 acquires the image information to obtain an image of the carriage; if it is a passenger carriage, the carriage is avoided from scanning.

As shown in FIG. 4, it is a schematic view of reciprocal scanning, in which the downward and upward scanning processes are the same.

As shown in FIG. 5, a column 8 is arranged on one side or both sides of the train respectively, and the camera is mounted on the column 8, so that the flare angle of the camera can cover the bottom and the top of the carriage.

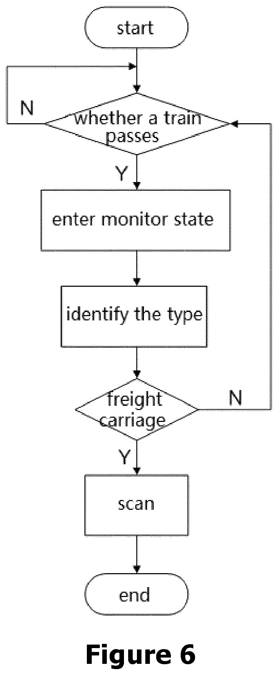

As shown in FIG. 6, it is a main flow chart of the scanning process. When the first sensor group 41 monitors that there is arrival of a train, the monitoring device enters a scanning state, so that the wheelbase measuring device starts to acquire the wheelbase information, and identify the wheelbase by the control system. Meanwhile, the first image capturing device 1 is initiated to capture an image of the carriage, and identify the type and identify a carriage number by the control system, and comprehensively analyze the identification result of the type of the image and the identification result of the type of the wheelbase according to a hook signal of each carriage, so as to obtain a final identification result of the carriage;

If the carriage is a freight carriage and the radiation area is identified to be safe, when the carriage arrives at the third sensor group 43, the accelerator 71 emits a beam, and the detector 72 acquires the information, thereby obtaining a scanned image of the carriage. The scanned image is bound to the captured image and the identified carriage number of the carriage at the same time;

If the carriage is a passenger carriage, it will be automatically avoided from scanning.

For a train running in a reverse direction, its scanning mainly utilizes the second sensor group 42, the fourth sensor group 44, and the first sensor group 41, and the scanning process is similar to the forward running train.

By illustrating a plurality of embodiments of the equipment and method for scanning a carriage of a train according to the present invention, it is possible to observe that the embodiments of the equipment and method for scanning a carriage of a train according to the present invention at least possess the following one or more advantages:
1. By providing the wheelbase measuring device and the image capturing device, the type of the carriage may be judged in two manners from different perspectives, so that it is possible to cancel manual involvement, lessen manual mistakes and make the accuracy higher, and it is also possible to reduce the manual cost;
2. By providing the monitoring device, including the area sensors and/or light curtains, it is possible to realize all-round automatic monitoring and protection of the radiation area, thereby further lessening manual involvement and achieving full automatic scanning;
3. By reasonably arranging various means, the land occupation range of the installation area is diminished to provide the competitiveness of the product, and at the same time, a substantial civil construction cost is saved. There is a better adaptability to complex and narrow field environments, thereby improving the adaptability of the device.

Finally, it should be explained that: the aforementioned embodiments are only used to describe the technical solution of the present invention rather than limiting the same; although detailed explanations are made to the present invention by referring to preferred embodiments, a common technical person in the art should understand that: it is still possible to make amendments to the embodiments of the present invention or make equivalent replacements to part of the technical features; without departing from the scope of the present invention, which is solely defined by the appended claims.

## Claims

1. An equipment for scanning a carriage of a train, comprising:
a first wheelbase measuring device, for measuring a wheelbase of the carriage;
a first image capturing device (1), for capturing an image of the carriage;
a radiation scanning device (7), with a scanning mode and a non-scanning mode, for scanning the carriage; and
a control system, for identifying a type of the carriage according to wheelbase information measured by the first wheelbase measuring device and the image captured by the first image capturing device (1), and changing a mode of the radiation scanning device (7) according to the type of the carriage;
a first sensor group (41), arranged upstream of the first image capturing device (1), for detecting an arrival of the carriage and sending an arrival signal to the control system to enable the control system to calculate the time when the first image capturing device (1) starts to capture an image according to the arrival signal, and also used as the first wheelbase measuring device to measure the wheelbase of the carriage and send wheelbase information to the control system, so as to enable the control system to identify the type of the carriage according to the wheelbase information;
a third sensor group (43), arranged upstream of the radiation scanning device (7) and downstream of the first image capturing device (1), for detecting an arrival and a departure of the carriage, and sending an arrival signal and a departure signal to the control system, so as to enable the control system to calculate the time when the radiation scanning device (7) starts scanning according to the arrival signal and the time when the radiation scanning device (7) stops scanning according to the departure signal in the condition that the carriage is identified as a freight carriage;
a second sensor group (42), arranged downstream of the radiation scanning device (7);
a fourth sensor group (44), arranged downstream of the radiation scanning device (7) and upstream of the second image capturing device (2), so as to scan the carriages traveling in two opposite directions through the first sensor group (41), the second sensor group (42), the third sensor group (43) and the fourth sensor group (44); and
**characterized in that** the equipment further comprises:
a second image capturing device (2), arranged downstream of the radiation scanning device (7) and upstream of the second sensor group (42);
a monitoring device, for monitoring whether an object besides the carriage enters into a radiation area formed by the radiation scanning device (7);
wherein the monitoring device comprises an area sensor (3) arranged within the radiation area, and the control system is configured to calculate the time when the train enters the radiation area according to the arrival signal detected by the first sensor group (41) and the time when the train leaves the radiation area according to the arrival signal detected by the second sensor group (42), so as to control the area sensor (3) to monitor the radiation area when the train leaves the radiation area, and monitor the radiation areas besides of the carriage when the train enters the radiation area; or
wherein the monitoring device comprises:
a first light curtain (5), arranged at an entrance of the radiation area; and
a second light curtain (6), arranged at an exit of the radiation area;
wherein the control system is configured to calculate the time when the train enters the radiation area according to the arrival signal detected by the first sensor group (41) and the time when the train leaves the radiation area according to the arrival signal detected by the second sensor group (42), so as to control the first light curtain (5) and the second light curtain (6) to be opened when the train leaves the radiation area, and the first light curtain (5) and the second light curtain (6) to be closed when the train enters the radiation area.

2. The equipment for scanning a carriage of a train according to claim 1, wherein the control system is configured to identify a type of the carriage according to the wheelbase information measured by the first wheelbase measuring device, identify a type of the carriage according to the image captured by the first image capturing device (1), and compare a first identification result identified by the wheelbase with a second identification result identified by the image, so as to output an identification result when the first identification result and the second identification result are consistent, and send to the radiation scanning device (7) a signal to stop scanning when the first identification result and the second identification result are inconsistent.

3. The equipment for scanning a carriage of a train according to claim 1, wherein the control system is configured to change the mode of the radiation scanning device (7) into the scanning mode when the carriage passes and is identified as a freight carriage; and change the mode of the radiation scanning device (7) into the non-scanning mode when the carriage does not pass or the carriage passes and is identified as a passenger carriage.

4. The equipment for scanning a carriage of a train according to claim 1, wherein there is a first preset distance between the third sensor group (43) and the radiation scanning device (7), and the third sensor group (43) is also configured to detect a speed of the carriage to enable the control system to calculate the time when the radiation scanning device (7) starts scanning according to the arrival signal, the speed of the carriage, and the first preset distance, and the time when the radiation scanning device (7) stops scanning according to the departure signal, the speed of the carriage, and the first preset distance.

5. A method for scanning a carriage of a train using the equipment for scanning a carriage of a train according to any one of claims 1 to 4, said method comprising the steps of:
measuring a wheelbase of the carriage and capturing an image of the carriage;
identifying a type of the carriage according to the wheelbase and the image; and
changing a mode of a radiation scanning device (7) for scanning the carriage with a scanning mode and a non-scanning mode according to the type of the carriage.

6. The method for scanning a carriage of a train according to claim 5, wherein the operation of identifying a type of the carriage according to the wheelbase and the image comprising:
identifying a type of the carriage according to the wheelbase, and identifying a type of the carriage according to the image respectively;
comparing a first identification result identified by the wheelbase with a second identification result identified by the image; and
outputting an identification result when the first identification result and the second identification result are consistent; and sending to the radiation scanning device (7) a signal to stop scanning when the first identification result and the second identification result are inconsistent.

7. The method for scanning a carriage of a train according to claim 5, further comprising:
detecting an arrival and a departure of the carriage; and
calculating the time when the radiation scanning device (7) starts scanning according to an arrival signal and the time when the radiation scanning device (7) stops scanning according to a departure signal.

## Patentansprüche

1. Ausrüstung zum Abtasten eines Wagens eines Zuges, umfassend:
eine erste Radstandsmessvorrichtung zum Messen eines Radstands des Wagens;
eine erste Bilderfassungsvorrichtung (1) zum Erfassen eines Bildes des Wagens;
eine Strahlungsabtastvorrichtung (7), mit einem Abtastmodus und einem Nicht-Abtastmodus, zum Abtasten des Wagens; und
ein Steuersystem zum Identifizieren eines Typs des Wagens gemäß Radstandsinformationen, die von der ersten Radstandsmessvorrichtung gemessen werden, und dem von der ersten Bilderfassungsvorrichtung (1) erfassten Bild und zum Ändern eines Modus der Strahlungsabtastvorrichtung (7) gemäß dem Typ des Wagens;
eine erste Sensorgruppe (41), die stromaufwärts der ersten Bilderfassungsvorrichtung (1) angeordnet ist, um eine Ankunft des Wagens zu erfassen und ein Ankunftssignal an das Steuersystem zu senden, um es dem Steuersystem zu ermöglichen, die Zeit zu berechnen, zu der die erste Bilderfassungsvorrichtung (1) beginnt, ein Bild gemäß dem Ankunftssignal zu erfassen, und die auch als die erste Radstandsmessvorrichtung verwendet wird, um den Radstand des Wagens zu messen und Radstandsinformationen an das Steuersystem zu senden, um es dem Steuersystem zu ermöglichen, den Typ des Wagens gemäß den Radstandsinformationen zu identifizieren;
eine dritte Sensorgruppe (43), die stromaufwärts von der Strahlungsabtastvorrichtung (7) und stromabwärts von der ersten Bilderfassungsvorrichtung (1) angeordnet ist, um eine Ankunft und eine Abfahrt des Wagens zu erfassen und ein Ankunftssignal und ein Abfahrtssignal an das Steuersystem zu senden, um es dem Steuersystem zu ermöglichen, die Zeit, zu der die Strahlungsabtastvorrichtung (7) die Abtastung beginnt, gemäß dem Ankunftssignal und die Zeit, zu der die Strahlungsabtastvorrichtung (7) die Abtastung beendet, gemäß dem Abfahrtssignal in dem Zustand zu berechnen, dass der Wagen als ein Güterwagen identifiziert wird;
eine zweite Sensorgruppe (42), die stromabwärts von der Strahlungsabtastvorrichtung (7) angeordnet ist;
eine vierte Sensorgruppe (44), die stromabwärts der Strahlungsabtastvorrichtung (7) und stromaufwärts der zweiten Bilderfassungsvorrichtung (2) angeordnet ist, um die in zwei entgegengesetzte Richtungen fahrenden Wagen durch die erste Sensorgruppe (41), die zweite Sensorgruppe (42), die dritte Sensorgruppe (43) und die vierte Sensorgruppe (44) abzutasten;
und **dadurch gekennzeichnet, dass** die Ausrüstung weiterhin:
eine zweite Bilderfassungsvorrichtung (2), die stromabwärts von der Strahlungsabtastvorrichtung (7) und stromaufwärts von der zweiten Sensorgruppe (42) angeordnet ist;
eine Überwachungsvorrichtung, um zu überwachen, ob ein Objekt außer dem Wagen in einen von der Strahlungsabtastvorrichtung (7) gebildeten Strahlungsbereich eintritt;
wobei die Überwachungsvorrichtung einen Bereichssensor (3) umfasst, der innerhalb des Strahlungsbereichs angeordnet ist, und das Steuersystem so konfiguriert ist, dass es den Zeitpunkt, zu dem der Zug in den Strahlungsbereich einfährt, gemäß dem von der ersten Sensorgruppe (41) erfassten Ankunftssignal und den Zeitpunkt, zu dem der Zug den Strahlungsbereich verlässt, gemäß dem von der zweiten Sensorgruppe (42) erfassten Ankunftssignal berechnet, um den Bereichssensor (3) so zu steuern, dass er den Strahlungsbereich überwacht, wenn der Zug den Strahlungsbereich verlässt, und die Strahlungsbereiche neben dem Wagen überwacht, wenn der Zug in den Strahlungsbereich einfährt; oder
wobei die Überwachungsvorrichtung:
einen ersten Lichtvorhang (5), der an einem Eingang des Strahlungsbereichs angeordnet ist; und
einen zweiten Lichtvorhang (6), der an einem Ausgang des Strahlungsbereichs angeordnet ist;
wobei das Steuersystem so konfiguriert ist, dass es den Zeitpunkt, zu dem der Zug in den Strahlungsbereich einfährt, gemäß dem von der ersten Sensorgruppe (41) erfassten Ankunftssignal und den Zeitpunkt, zu dem der Zug den Strahlungsbereich verlässt, gemäß dem von der zweiten Sensorgruppe (42) erfassten Ankunftssignal berechnet, um den ersten Lichtvorhang (5) und den zweiten Lichtvorhang (6) so zu steuern, dass sie geöffnet werden, wenn der Zug den Strahlungsbereich verlässt, und den ersten Lichtvorhang (5) und den zweiten Lichtvorhang (6) so zu steuern, dass sie geschlossen werden, wenn der Zug in den Strahlungsbereich einfährt, umfasst, umfasst.

2. Ausrüstung zum Abtasten eines Wagens eines Zuges nach Anspruch 1, wobei das Steuersystem so konfiguriert ist, dass es einen Typ des Wagens gemäß der von der ersten Radstandsmessvorrichtung gemessenen Radstandsinformation identifiziert, einen Typ des Wagens gemäß dem von der ersten Bilderfassungsvorrichtung (1) aufgenommenen Bild identifiziert, und ein erstes Identifizierungsergebnis, das durch den Radstand identifiziert wurde, mit einem zweiten Identifizierungsergebnis, das durch das Bild identifiziert wurde, zu vergleichen, um ein Identifizierungsergebnis auszugeben, wenn das erste Identifizierungsergebnis und das zweite Identifizierungsergebnis übereinstimmen, und ein Signal an die Strahlungsabtastvorrichtung (7) zu senden, um das Abtasten zu beenden, wenn das erste Identifizierungsergebnis und das zweite Identifizierungsergebnis nicht übereinstimmen.

3. Ausrüstung zum Abtasten eines Wagens eines Zuges nach Anspruch 1, wobei das Steuersystem so konfiguriert ist, dass es den Modus der Strahlungsabtastvorrichtung (7) in den Abtastmodus ändert, wenn der Wagen passiert und als Güterwagen identifiziert wird; und den Modus der Strahlungsabtastvorrichtung (7) in den Nicht-Abtastmodus ändert, wenn der Wagen nicht passiert oder der Wagen passiert und als Personenwagen identifiziert wird.

4. Ausrüstung zum Abtasten eines Wagens eines Zuges nach Anspruch 1, wobei es einen ersten voreingestellten Abstand zwischen der dritten Sensorgruppe (43) und der Strahlungsabtastvorrichtung (7) gibt und die dritte Sensorgruppe (43) auch so konfiguriert ist, dass sie eine Geschwindigkeit des Waggons erfasst, um es dem Steuersystem zu ermöglichen, die Zeit, zu der die Strahlungsabtastvorrichtung (7) das Abtasten beginnt, gemäß dem Ankunftssignal, der Geschwindigkeit des Waggons und dem ersten voreingestellten Abstand zu berechnen, und die Zeit, zu der die Strahlungsabtastvorrichtung (7) das Abtasten beendet, gemäß dem Abfahrtssignal, der Geschwindigkeit des Waggons und dem ersten voreingestellten Abstand zu berechnen.

5. Verfahren zum Abtasten eines Wagens eines Zuges unter Verwendung der Ausrüstung zum Abtasten eines Wagens eines Zuges nach einem der Ansprüche 1 bis 4, umfassend die folgenden Schritte:
Messen eines Radstandes des Wagens und Aufnehmen eines Bildes des Wagens;
Identifizieren eines Wagentyps gemäß dem Radstand und dem Bild; und
Ändern eines Modus einer Strahlungsabtastvorrichtung (7) zum Abtasten des Wagens mit einem Abtastmodus und einem Nicht-Abtastmodus entsprechend dem Typ des Wagens.

6. Verfahren zum Abtasten eines Wagens eines Zuges nach Anspruch 5, wobei der Vorgang des Identifizierens eines Wagentyps gemäß dem Radstand und dem Bild umfasst:
Identifizieren eines Wagentyps anhand des Radstandes bzw. Identifizieren eines Wagentyps anhand des Bildes;
Vergleichen eines ersten Identifikationsergebnisses, das durch den Radstand identifiziert wird, mit einem zweiten Identifikationsergebnis, das durch das Bild identifiziert wird; und
Ausgeben eines Identifikationsergebnisses, wenn das erste Identifikationsergebnis und das zweite Identifikationsergebnis übereinstimmen; und Senden eines Signals an die Strahlungsabtastvorrichtung (7), um das Abtasten zu beenden, wenn das erste Identifikationsergebnis und das zweite Identifikationsergebnis nicht übereinstimmen.

7. Verfahren zum Abtasten eines Waggons eines Zuges nach Anspruch 5, ferner umfassend:
Erfassen einer Ankunft und einer Abfahrt des Wagens; und
Berechnen des Zeitpunkts, zu dem die Strahlungsabtastvorrichtung (7) das Abtasten gemäß einem Ankunftssignal beginnt, und des Zeitpunkts, zu dem die Strahlungsabtastvorrichtung (7) das Abtasten gemäß einem Abfahrtssignal beendet.

## Revendications

1. Équipement pour balayer un wagon d'un train, comprenant :
un premier dispositif de mesure d'empattement, pour mesurer un empattement du wagon ;
un premier dispositif de capture d'image (1), pour capturer une image du wagon ;
un dispositif de balayage de radiations (7), avec un mode de balayage et un mode de non-balayage, pour balayer le wagon ; et
un système de commande, pour identifier un type du wagon conformément à des informations d'empattement mesurées par le premier dispositif de mesure d'empattement et à l'image capturée par le premier dispositif de capture d'image (1), et changer un mode du dispositif de balayage de radiations (7) conformément au type du wagon ;
un premier groupe de capteurs (41), agencé en amont du premier dispositif de capture d'image (1), pour détecter une arrivée du wagon et envoyer un signal d'arrivée au système de commande pour permettre au système de commande de calculer le moment où le premier dispositif de capture d'image (1) commence à capturer une image conformément au signal d'arrivée, et également utilisé comme premier dispositif de mesure d'empattement pour mesurer l'empattement du wagon et envoyer des informations d'empattement au système de commande, de manière à permettre au système de commande d'identifier le type du wagon conformément aux informations d'empattement ;
un troisième groupe de capteurs (43), agencé en amont du dispositif de balayage de radiations (7) et en aval du premier dispositif de capture d'image (1), pour détecter une arrivée et un départ du wagon, et envoyer un signal d'arrivée et un signal de départ au système de commande, de manière à permettre au système de commande de calculer le moment où le dispositif de balayage de radiations (7) commence le balayage conformément au signal d'arrivée et le moment où le dispositif de balayage de radiations (7) arrête le balayage conformément au signal de départ à condition que le wagon soit identifié comme un wagon de marchandises ;
un deuxième groupe de capteurs (42), agencé en aval du dispositif de balayage de radiations (7) ;
un quatrième groupe de capteurs (44), agencé en aval du dispositif de balayage de radiations (7) et en amont du second dispositif de capture d'image (2), de manière à balayer les wagons se déplaçant dans deux directions opposées par le biais du premier groupe de capteurs (41), du deuxième groupe de capteurs (42), du troisième groupe de capteurs (43) et du quatrième groupe de capteurs (44) ; et
**caractérisé en ce que** l'équipement comprend en outre :
un second dispositif de capture d'image (2), agencé en aval du dispositif de balayage de radiations (7) et en amont du deuxième groupe de capteurs (42) ;
un dispositif de surveillance, pour surveiller si un objet en plus du wagon entre dans une zone de radiations formée par le dispositif de balayage de radiations (7) ;
dans lequel le dispositif de surveillance comprend un capteur de zone (3) agencé dans la zone de radiations, et le système de commande est configuré pour calculer le moment où le train entre dans la zone de radiations conformément au signal d'arrivée détecté par le premier groupe de capteurs (41) et le moment où le train quitte la zone de radiations conformément au signal d'arrivée détecté par le deuxième groupe de capteurs (42), de manière à commander le capteur de zone (3) pour surveiller la zone de radiations lorsque le train quitte la zone de radiations, et surveiller les zones de radiations en plus du wagon lorsque le train entre dans la zone de radiations ; ou
dans lequel le dispositif de surveillance comprend :
un premier rideau de lumière (5), agencé à une entrée de la zone de radiations ; et
un second rideau de lumière (6), agencé à une sortie de la zone de radiations ;
dans lequel le système de commande est configuré pour calculer le moment où le train entre dans la zone de radiations conformément au signal d'arrivée détecté par le premier groupe de capteurs (41) et le moment où le train quitte la zone de radiations conformément au signal d'arrivée détecté par le deuxième groupe de capteurs (42),
de manière à commander le premier rideau de lumière (5) et le second rideau de lumière (6) pour qu'ils soient ouverts lorsque le train quitte la zone de radiations, et
le premier rideau de lumière (5) et le second rideau de lumière (6) pour qu'ils soient fermés lorsque le train entre dans la zone de radiations.

2. Équipement pour balayer un wagon d'un train selon la revendication 1, dans lequel le système de commande est configuré pour identifier un type de wagon conformément aux informations d'empattement mesurées par le premier dispositif de mesure d'empattement, identifier un type du wagon conformément à l'image capturée par le premier dispositif de capture d'image (1), et comparer un premier résultat d'identification identifié par l'empattement à un second résultat d'identification identifié par l'image, de manière à émettre un résultat d'identification lorsque le premier résultat d'identification et le second résultat d'identification sont cohérents, et envoyer au dispositif de balayage de radiations (7) un signal pour arrêter le balayage lorsque le premier résultat d'identification et le second résultat d'identification sont incohérents.

3. Équipement pour balayer un wagon d'un train selon la revendication 1, dans lequel le système de commande est configuré pour changer le mode du dispositif de balayage de radiations (7) en mode de balayage lorsque le wagon passe et est identifié comme un wagon de marchandises ; et changer le mode du dispositif de balayage de radiations (7) en mode de non-balayage lorsque le wagon ne passe pas ou le wagon passe et est identifié comme un wagon de passagers.

4. Équipement pour balayer un wagon d'un train selon la revendication 1, dans lequel il y a une première distance prédéfinie entre le troisième groupe de capteurs (43) et le dispositif de balayage de radiations (7), et le troisième groupe de capteurs (43) est également configuré pour détecter une vitesse du wagon pour permettre au système de commande de calculer le moment où le dispositif de balayage de radiations (7) commence le balayage conformément au signal d'arrivée, à la vitesse du wagon et à la première distance prédéfinie, et le moment où le dispositif de balayage de radiations (7) arrête le balayage conformément au signal de départ, à la vitesse du wagon et à la première distance prédéfinie.

5. Procédé pour balayer un wagon d'un train en utilisant l'équipement pour balayer un wagon d'un train selon l'une quelconque des revendications 1 à 4, ledit procédé comprenant les étapes consistant à :
mesurer un empattement du wagon et capturer une image du wagon ;
identifier un type du wagon conformément à l'empattement et à l'image ; et
changer un mode d'un dispositif de balayage de radiations (7) pour balayer le wagon avec un mode de balayage et un mode de non-balayage conformément au type du wagon.

6. Procédé pour balayer un wagon d'un train selon la revendication 5, dans lequel l'opération d'identification d'un type du wagon conformément à l'empattement et à l'image comprend :
l'identification d'un type du wagon conformément à l'empattement, et l'identification d'un type du wagon conformément à l'image respectivement ;
la comparaison d'un premier résultat d'identification identifié par l'empattement à un second résultat d'identification identifié par l'image ; et
l'émission d'un résultat d'identification lorsque le premier résultat d'identification et le second résultat d'identification sont cohérents ; et l'envoi au dispositif de balayage de radiations (7) d'un signal pour arrêter le balayage lorsque le premier résultat d'identification et le second résultat d'identification sont incohérents.

7. Procédé pour balayer un wagon d'un train selon la revendication 5, comprenant en outre :
la détection d'une arrivée et d'un départ du wagon ; et
le calcul du moment où le dispositif de balayage de radiations (7) commence le balayage conformément à un signal d'arrivée et du moment où le dispositif de balayage de radiations (7) arrête le balayage conformément à un signal de départ.
